# EUROPEAN PATENT SPECIFICATION

(11) **EP 2 670 267 B1**
(45) Date of publication and mention of the grant of the patent: **15.04.2015**
(21) Application number: 11796781.0
(22) Date of filing: 25.11.2011
(51) Int. Cl.: A42B 3/14, A42C 2/00, B29C 45/14

(54) **STRAP HAVING AT LEAST ONE CLIP**
RIEMEN MIT MINDESTENS EINEM CLIP
SANGLE DOTÉE D'AU MOINS UNE AGRAFE

(30) Priority: 31.01.2011 GB 201101600
(43) Date of publication of application: 11.12.2013
(73) Proprietor: JSP Limited, Oxfordshire OX29 0TA (GB)
(72) Inventor: JOHNSTONE, Clive, Oxford Oxfordshire OX29 0TA (GB); PRATLEY, David, Oxford Oxfordshire OX29 0TA (GB)
(74) Representative: Strachan, Victoria Jane
(86) International application number: PCT/GB2011/052332
(87) International publication number: WO 2012/104572

(56) References cited:
- EP-A1- 1 775 110
- DE-U1- 29 914 894
- FR-A5- 2 108 656
- US-A- 4 760 714
- US-A1- 2002 116 749

## Description

The present invention relates to a strap having at least one clip.

Straps are used for various purposes, e.g. as carrying handles or closures on bags and the like. In many cases clips are used to connect the straps to another component or object. An important use for straps with clips is as safety helmet cradles, where they are used to comfortably fit the helmet on the head of a user. These straps include clips at their ends that fit into suitable slots arranged around the interior of the helmet. Typically, two or more straps are arranged in a criss-cross fashion.

The connection between the strap and its clips needs to be sufficiently strong to withstand impact to the helmet, otherwise there is a risk that a strap can become loose, causing the helmet to slip and allowing injury to the wearer's head. Conventionally, in order to attach the clip to the strap, the end of a strap is passed through a slot in a preformed clip and then looped round and fixed to an inner portion of the strap by stitching or ultrasonic welding.

However, such fixing is difficult to achieve in an automated manufacturing process and either needs to be done by hand, or requires a special robot to "fold over" the strap end and transfer of the strap and the clip between stations to perform the fixing operation. It is also known to form a clip on a strap by over-moulding a clip onto the end of a conventional strap made of a single type of material. However, with such conventional over-moulding there is no strong connection between the clip and the strap and so clip needs to be positioned so that the strap is not directly pulled when in situ in a safety helmet. A known way of addressing this issue is to add friction by turning the clip 180° and wrapping the strap around it to align with the direction of pulling; however, this can cause automation hindrance in the assembly process. All these complications have time and cost implications for manufacturers.

US 2002/116749 describes a protective helmet that includes a shell, a headband with an absorbent brow pad, and a suspension. A key is secured to each end of each of the straps of the suspension for insertion into respective key sockets spaced about the periphery of the shell of the protective helmet along its lower edge. The keys are moulded directly to and around a strap, rather than sewn to the strap. Lengths of nylon or polypropylene strap material are positioned in a mould, and plastic is injected into the mould cavity to encapsulate the straps and form the plastic component, e.g., a key for the suspension of the protective helmet.

Embodiments of the present invention are intended to address at least some of the abovementioned problems. Embodiments of the invention allow the clip to be formed directly onto a strap during a moulding process and do not require an end of the strap to be looped round and fixed to another portion of the strap.

According to a first aspect of the present invention there is provided a strap having at least one clip, the strap including:
an elongate flexible member, and
at least one clip,
wherein the elongate flexible member is formed partially of a first material, having a melting point corresponding to a melting point of a material of which said clip is mainly or exclusively formed, wherein the elongate flexible member is partially formed of a second material, having a melting point higher than the melting point of the first material, and wherein the first material and said material of which the clip is mainly or exclusively formed are chemically compatible so as to form a structure upon heating, the first material and the clip being fused together during a heating process.

Having the melting point the first material corresponding to the melting point of the material forming the clip (as well as the chemical compatibility of these materials) means that fusion between the clip and the elongate flexible member can occur during heating, such as during an over-moulding process.

The melting point of the first material and the clip material may "correspond" by being within, say, around 5°C of each other, both are lower than the melting point of the other strap material.

The melting point of the second material is higher than that of the first material (and the clip material) so that no fusion between the second material and the clip material occurs during the heating.

The elongate flexible member may comprise a fabric formed of the first and the second materials. The first and the second materials may be weaved together, e.g. where threads of the first material are arranged in one direction and threads of the second material are weaved through/between the first material in a second direction. For example, the first material may comprise wefts of the fabric and the second material may comprise warps of the fabric. The weave may be a plain weave, or a V weave. In one embodiment the clip material comprises mainly or exclusively of polypropylene. The first material of the flexible elongate member may comprise polypropylene and the second material may comprise polyester. The clip may be fused at or adjacent at least one end of the flexible elongate material. A portion, typically an end, of the flexible elongate member may be encased within a body the clip. The end of the flexible elongate member may not pass out through the body of the clip. In use, the clip may engage with a clip inside a safety helmet. The strap may comprise a safety helmet cradle strap.

According to a further aspect of the present invention there is provided a safety helmet including at least one such strap.

The end of the strap may not pass out of the main body and may not be looped round to be attached to another portion of the strap.

According to another aspect of the present invention there is provided a safety helmet cradle including at least one such strap.

According to a further aspect of the present invention, in claim 12 there is provided a method of forming a strap having at least one clip.

Whilst the invention has been described above, it extends to any inventive combination of features set out above or in the following description. Although illustrative embodiments of the invention are described in detail herein with reference to the accompanying drawings, it is to be understood that the invention is not limited to these precise embodiments. As such, many modifications and variations will be apparent to practitioners skilled in the art. Furthermore, it is contemplated that a particular feature described either individually or as part of an embodiment can be combined with other individually described features, or parts of other embodiments, even if the other features and embodiments make no mention of the particular feature. Thus, the invention extends to such specific combinations not already described.

The scope of protection is defined by the claims.

The invention may be performed in various ways, and, by way of example only, embodiments thereof will now be described, reference being made to the accompanying drawings in which:
Figure 1 shows a first example of a safety helmet cradle strap with clips fixed to each end;
Figure 2 shows a plan view of a schematic illustration of apparatus for manufacturing the strap, and
Figure 3 shows three straps fixed inside a safety helmet.

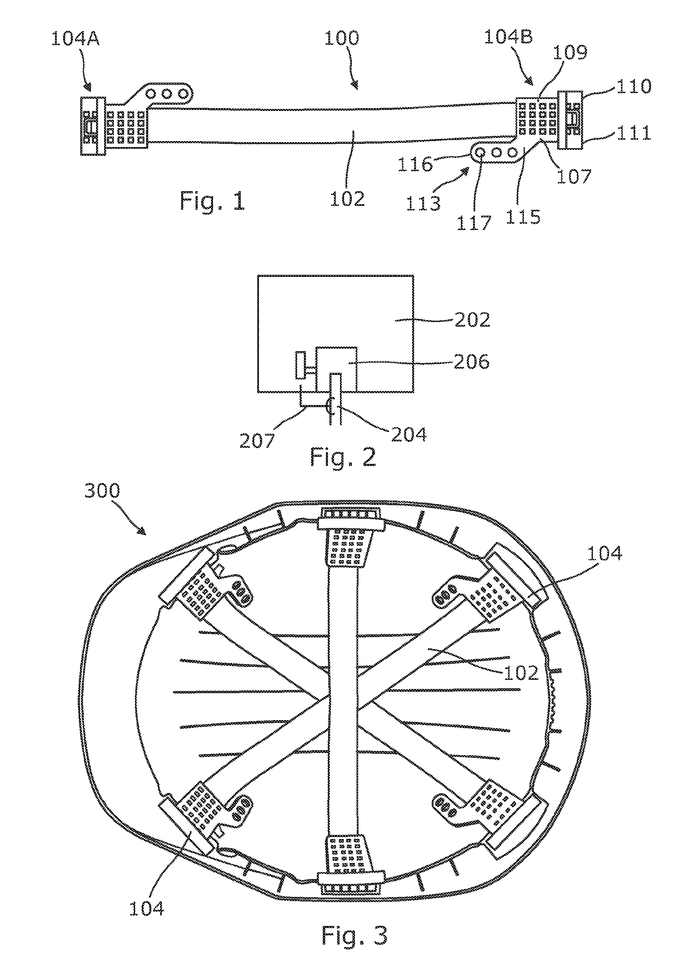

Referring to Figure 1, an example safety helmet cradle strap 100 comprises a flexible elongate member 102 having clips 104A, 104B fixed to each of its ends. The flexible elongate member typically comprises a fabric formed of at least two different materials. Typically, two different materials will be used, but in alternative embodiments more than that number may be used. The fabric may be woven and the warps of the weave may be formed by one of the materials and the wefts by another of the material(s). The weave may be a plain weave, or a V weave, for instance. In one example, the material used for the wefts (26 in number) of the woven fabric comprises polypropylene and the material used for the warps (44 in number) comprises polyester. However, it will be understood that these are examples only and other materials, such as polyamide (nylon) could be used. In one example the strap has a length of around 270 - 305 mm, a width of about 15 - 25 mm.

Clip 104A has a rectangular main body 107 having square/rectangular apertures 109 in a generally grid-like arrangement, which can reduce the overall weight. The clip generally has a thickness of around 3 mm and the main body 107 has dimensions of approximately 25 mm x 25 mm. The clip also has an enlarged rectangular end portion 110 of around 38 mm x 15 mm.

The end portion also includes a grid-like arrangement of rectangular indentations/apertures 111. The end of the strap 102 extends to a point about 1 - 2 mm from the outer edge of the end portion 110. A dogleg type projection 113 extends outwardly from the side of the main body 107. The projection includes a first angled portion 115 extending at an angle of around 45° with respect to the side of the main body. Extending from that first portion is another elongate portion 116 that is parallel to the main length of the strap 104. The elongate portion includes a row of circular apertures 117, which, in use, attach to bulbous pin-like features on a strap component inside the helmet.

The clip 104B at the other end of the strap is substantially identical, except that it is arranged so that its dogleg portion is positioned on the opposite side edge of the strap. In other embodiments there are no dogleg portions and it will be understood that the shape and dimensions of the clip can vary from the example shown and that different types of clips may be attached to different ends (or other portions) of the straps. In some cases only one end of the strap may be fitted with a clip.

Each clip is also mainly or exclusively formed of at least one material that has a melting point corresponding to a melting point of one of the strap materials. In one example the clip is also formed of polypropylene. Polypropylene has a melting point of around 160 - 170°C, whilst polyester has a melting point of around 260°C. Further, the materials used for the clip and in the strap are chemically compatible so that when a portion of the strap and the clip materials are in contact with each other and heated during a manufacturing process (as described below) to around 230°C and then cooled, the polypropylene in the strap portion can fuse/meld/bond with the clip to form an integrated structure, whilst the polyester in the strap portion remains stable, retaining the integrity of the portion. Whilst in this example the strap wefts and the clip are formed of the same material, it will be appreciated that this need not be the case and that one of the strap materials and the clip can be formed of different materials, provided their melting points correspond (e.g. are within, say, around 5°C of each other, both are lower than the melting point of the other strap material). The present inventors have found that it is best to have fabric warps with a higher melting point than the fabric weft because this results in the strongest bond between the clip and the strap. Statistics for the strap used in the example are given below: Polyester / polypropylene webbing

| | |
|---|---|
| Width | 20mm +0mm -0.5mm |
| Warp | 44 ends of 550 decitex polyester |
| Weft | 26 picks per 2.54 cm (1 inch) of 440 decitex polypropylene |
| Weight | 4.66 grams per metre |

The inventors experimented with various combinations of strap materials (e.g. fabrics comprising various combinations of nylon, polyester and polypropylene) and clip materials (e.g. high density polyethylene, low density poly ethylene, polypropylene, polyamide (nylon), polyester and ABS), but found that the above combination of a polypropylene and polyester strap and polypropylene clip resulted having the best fusion, ideal stretch properties, low weight and low manufacturing costs. However, other combinations of materials can be used. For example, members of the polyolefin group other than polypropylene could be used.

Figure 2 illustrates schematically apparatus for manufacturing the safety helmet cradle straps. In use, a clip set mould tool is loaded into a press machine 202. One or more webbing lengths 204 (e.g. of mixed yarn Polyester/Polypropylene) is/are then placed into the Clip Set mould tool 206. This step can be automated by means of a robot arm 207 or performed manually. The tool cavities are then closed, clamping the webbing in place. The press machine is heated to at least the melting temperature of Polypropylene (but not as high as the melting temperature of polyester) and Polypropylene polymer is injected into the tool cavities, moulding over and encapsulating the ends of the webbing. The tool cavities are opened and the overmoulded clip/webbing sets are removed from the mould tool. Again, this step can be automated by means of a robot arm or performed manually. The tool may mould clips on both ends of the strap substantially simultaneously, or a clip may be formed at one end first and then the other end of the strap is placed in the moulding toold. The overmoulded clip/webbing sets can be transferred to a helmet assembly location, e.g. manually or by robot arm. The overmoulded clip/webbing may be clipped onto a strap component to form the harness assembly. The clips of the harness assembly are then pushed into corresponding clip slots in a helmet shell moulding. Helmet finishing steps can include label attachment, potential printing requirements and packing operations. Thus, the clip is formed directly onto the strap during the moulding process and so there is no need to loop round part of the to attach it to another portion of the strap when fixing the clip. Further, the strap can be held in tension through the formation of the clip, which can help ensure that the fixing is secure.

Figure 3 shows an example set of three straps fixed inside a safety helmet 300 to form a cradle.

In contrast to forming clips on straps using over-moulding using a conventional single-material strap, embodiments of the present invention result in a chemical bond between one of the materials forming the strap material and the material forming the clip. Such a bond is not present when chemically incompatible materials are used. Having a bond between the strap and the clip in straps according to embodiments of the present invention means that the connection is sufficiently strong to withstand direct pulling, thereby eliminating the need to wrap the strap around the clip or the like for safety.

Although the main example application of the strap described above relates to safety helmet cradle straps, it will be understood that straps formed as described herein can be used for various purposes, including any product that uses webbing straps for a stress/performance critical purpose, such as fall arrest harnesses, parachute harnesses, sport harnesses, etc.

## Claims

1. A strap (100) having at least one clip, the strap including:
an elongate flexible member (102), and
at least one clip (104),
wherein the elongate flexible member is partially formed of a first material having a melting point corresponding to a melting point of a material of which the clip is mainly or exclusively formed, the strap **characterised by**:
the elongate flexible member being partially formed of a second material having a melting point higher than the melting point of the first material, and
wherein the first material and said material of which the clip is mainly or exclusively formed are chemically compatible so as to form a structure upon heating, the first material and the clip being fused together during a heating process.

2. A strap according to claim 1, wherein the heating process comprises an over-moulding process.

3. A strap according to any one of the preceding claims, wherein the elongate flexible member (102) comprises a fabric formed of the first and the second materials.

4. A strap according to claim 3, wherein the first and the second materials are woven together, wherein threads of the first material are arranged in one direction and threads of the second material are weaved through/between the first material in a second direction.

5. A strap according to any one of the preceding claims, wherein the clip (104) material comprises mainly or exclusively of polypropylene.

6. A strap according to any one of the preceding claims, wherein the first material of the flexible elongate member (102) comprises polypropylene and the second material comprises polyester.

7. A strap according to any one of the preceding claims, wherein the clip (104) is fused at or adjacent at least one end of the flexible elongate material (102).

8. A strap according to claim 7, wherein an end of the flexible elongate member (102) is encased within a body (107) of the clip (104).

9. A strap according to claim 8, wherein the end of the flexible elongate member (102) does not pass out through the body (107) of the clip (104).

10. A safety helmet (300) including at least one strap (100) according to any one of the preceding claims.

11. A safety helmet cradle including at least one strap (100) according to any one of claims 1 to 9.

12. A method of forming a strap (100) having at least one clip, the method including:
placing a portion of an elongate flexible member (102) into a clip set mould tool (206);
heating a clip material of which said clip (104) is mainly or exclusively formed to at least its melting point and transferring the heated clip material into the clip set mould tool to fuse around the portion of elongate flexible member,
the method **characterised in that** the elongate flexible member is formed of first and second materials, the second material having a melting point higher than the melting point of the first material, and
wherein the first material of the elongate flexible member has a melting point corresponding to the melting point of the clip material, and the first material and the clip material are chemically compatible so as to form a structure upon heating.

## Patentansprüche

1. Gurt (100) mit wenigstens einer Klammer, der einen länglichen, flexiblen Körper (102) und wenigstens eine Klammer (104) aufweist, wobei der längliche, flexible Körper teilweise aus einem ersten Material mit einem Schmelzpunkt gefertigt ist, der dem Schmelzpunkt eines Materials entspricht, aus dem die Klammer hauptsächlich oder ausschließlich besteht, **dadurch gekennzeichnet, daß** der längliche, flexible Körper teilweise aus einem zweiten Material gebildet ist, das einen Schmelzpunkt hat, der höher ist als der Schmelzpunkt des ersten Materials, und daß das erste Material sowie dasjenige Material, aus dem der Gurt hauptsächlich oder ausschließlich besteht, chemisch so verträglich ist, daß es beim Erwärmen eine Struktur bildet, aufgrund derer während eines Erwärmungsprozesses das erste Material und die Klammer zusammen verschweißen.

2. Gurt nach Anspruch 1, **dadurch gekennzeichnet, daß** der Erwärmungsprozeß einen Verschmelzungsvorgang bildet.

3. Gurt nach einem der vorhergehenden Ansprüche, **dadurch gekennzeichnet, daß** der längliche flexible Körper (102) ein Gewebe bildet, das aus dem ersten und den zweiten Materialien besteht.

4. Gurt nach Anspruch 3, **dadurch gekennzeichnet, daß** die ersten und zweiten Materialien miteinander verwebt sind, wobei Fäden des ersten Materials in der einen Richtung angeordnet sind und Fäden des zweiten Materials zwischen das erste Material in einer zweiten Richtung hindurchgewebt sind.

5. Gurt nach einem der vorhergehenden Ansprüche, **dadurch gekennzeichnet, daß** das Material der Klammer (104) hauptsächlich oder ausschließlich aus Polypropylen besteht.

6. Gurt nach einem der vorhergehenden Ansprüche, **dadurch gekennzeichnet, daß** das erste Material des flexiblen, länglichen Körpers (102) aus Propylen besteht und das zweite Material aus Polyester besteht.

7. Gurt nach einem vorhergehenden Ansprüche, **dadurch gekennzeichnet, daß** die Klammer (104) an oder neben wenigstens einem Ende des flexiblen, länglichen Materials (102) verklebt ist.

8. Gurt nach Anspruch 7, **dadurch gekennzeichnet, daß** ein Ende des flexiblen, länglichen Körpers (102) in einem Körper (107) der Klammer (104) eingeschlossen ist.

9. Gurt nach Anspruch 8, **dadurch gekennzeichnet, daß** das Ende des flexiblen, iängiichen Materials (102) nicht aus dem Körper (107) der Klammer (104) heraussteht.

10. Sicherheitshelm (300) mit wenigstens einem Gurt gemäß einem der vorhergehenden Ansprüche.

11. Sicherheitshelmbügel mit wenigstens einem Gurt (100) gemäß einem der Ansprüche 1 bis 9.

12. Verfahren zur Herstellung eines Gurtes (100), der wenigstens eine Klammer aufweist, wobei das Verfahren die folgenden Schritte beinhaltet: Plazierung eines Teils eines länglichen, flexiblen Körpers (102) in einem Klammersatz-Formwerkzeug (206); Erhitzen eines Klammermaterials, aus dem die Klammer (104) hauptsächlich oder ausschließlich besteht, auf wenigstens ihren Schmelzpunkt und Übertragen des erhitzten Klammermaterials in das Klammersatz-Formwerkzeug, um den Teil des länglichen, elastischen Körpers zu verschmelzen, **dadurch gekennzeichnet, daß** der längliche, elastische Körper aus ersten und zweiten Materialien geformt wird, wobei das zweite Material einen Schmelzpunkt aufweist, der höher ist als der Schmelzpunkt des ersten Materials, und wobei das erste Material des länglichen, flexiblen Körpers einen Schmelzpunkt hat, der dem Schmelzpunkt des Klammermaterials entspricht, und daß das erste Material sowie das Klammermaterial chemisch so verträglich sind, daß sie beim Erhitzen eine Struktur bilden.

## Revendications

1. Sangle (100) ayant au moins une agrafe, la sangle comprenant :
un élément souple allongé (102), et
au moins une agrafe (104),
l'élément souple allongé étant partiellement formé d'un premier matériau ayant un point de fusion correspondant à un point de fusion d'un matériau dont l'agrafe est principalement ou exclusivement formée, la sangle étant **caractérisée par** :
l'élément souple allongé est partiellement formé d'un second matériau ayant un point de fusion supérieur au point de fusion du premier matériau, et
le premier matériau et ledit matériau dont l'agrafe est principalement ou exclusivement formée sont chimiquement compatibles de façon à former une structure lors d'un chauffage, le premier matériau et l'agrafe étant fusionnés ensemble pendant un traitement de chauffage.

2. Sangle selon la revendication 1, dans laquelle le traitement de chauffage comprend un traitement de surmoulage.

3. Sangle selon l'une quelconque des revendications précédentes, dans laquelle l'élément souple allongé (102) comprend un tissu formé des premier et second matériaux.

4. Sangle selon la revendication 3, dans laquelle les premier et second matériaux sont tissés ensemble, les fils du premier matériau étant agencés dans une direction et les fils du second matériau étant tissés à travers/entre le premier matériau dans une seconde direction.

5. Sangle selon l'une quelconque des revendications précédentes, dans laquelle le matériau d'agrafe (104) comprend principalement ou exclusivement du polypropylène.

6. Sangle selon l'une quelconque des revendications précédentes, dans laquelle le premier matériau de l'élément allongé souple (102) comprend du polypropylene et le second matériau comprend du polyester.

7. Sangle selon l'une quelconque des revendications précédentes, dans laquelle l'agrafe (104) est fusionnée à ou de manière adjacente à au moins une extrémité du matériau allongé souple (102).

8. Sangle selon la revendication 7, dans laquelle une extrémité de l'élément allongé souple (102) est enfermée à l'intérieur d'un corps (107) de l'agrafe (104).

9. Sangle selon la revendication 8, dans laquelle l'extrémité de l'élément allongé souple (102) ne sort pas à travers le corps (107) de l'agrafe (104).

10. Casque de sécurité (300) comprenant au moins une sangle (100) selon l'une quelconque des revendications précédentes.

11. Coiffe de casque de sécurité comprenant au moins une sangle (100) selon l'une quelconque des revendications 1 à 9.

12. Procédé de formation d'une sangle (100) ayant au moins une agrafe, le procédé comprenant :
placer une partie d'un élément souple allongé (102) dans un outil de moule d'ensemble agrafe (206) ;
chauffer un matériau d'agrafe, dont ladite agrafe (104) est principalement ou exclusivement formée, au moins jusqu'à son point de fusion et transférer le matériau d'agrafe chauffé dans l'outil de moule d'ensemble agrafe pour fusion autour de la partie de l'élément souple allongé,
le procédé est **caractérisé par le fait que** l'élément souple allongé est formé de premier et second matériaux, le second matériau ayant un point de fusion supérieur au point de fusion du premier matériau, et
le premier matériau de l'élément souple allongé ayant un point de fusion correspondant au point de fusion du matériau d'agrafe, et le premier matériau et le matériau d'agrafe sont chimiquement compatibles de façon à former une structure lors d'un chauffage.
